# EUROPEAN PATENT APPLICATION

(11) **EP 3 726 253 A1**
(43) Date of publication of application: **21.10.2020**
(21) Application number: 19169939.6
(22) Date of filing: 17.04.2019
(51) Int. Cl.: G01S 19/48, G01S 5/16, G01S 5/02

(54) **VIDEO ENHANCED LOCATION ESTIMATES**

(71) Applicant: HERE Global B.V., 5611 ZT Eindhoven (NL)
(72) Inventor: IVANOV, Pavel, 33100 Tampere (FI); NURMINEN, Henri Jaakko Julius, 33100 Tampere (FI); WIROLA, Lauri Aarne Johannes, 33100 Tampere (FI)
(74) Representative: Cohausz & Florack

(57) **Abstract**

Inter-alia, a method is disclosed comprising: obtaining one or more first location estimates; obtaining one or more pieces of optical information; and/or obtaining one or more second location estimates; if one or more pieces of optical information are obtained: determining one or more second location estimates at least partially based on the one or more pieces of optical information; determining a matching information indicative of whether at least one first position of the one or more first location estimates relatively matches at least one second position of the one or more second location estimates; and determining one or more third location estimates.

It is further disclosed an according apparatus, computer program and system.

## Description

### FIELD

The following disclosure relates to the field of indoor positioning, or more particularly relates to systems, apparatuses, and methods for determining a location estimate at least partially based on optical information.

### BACKGROUND

Indoor positioning requires novel systems and solutions that are specifically developed for this purpose. The traditional positioning technologies, which are mainly used outdoors, i.e. satellite and cellular positioning technologies, cannot deliver such performance indoors that would enable seamless and equal navigation experience in both environments. The required positioning accuracy (2-3 m), coverage (-100 %) and floor detection are challenging to achieve with satisfactory performance levels with the systems and signals simply do not penetrate through the walls and roofs for adequate signal reception and the cellular signals have too narrow bandwidth for accurate ranging by default.

Several indoor-dedicated solutions have been developed and commercially deployed during the past years e.g. solutions based on pseudolites (GPS (Global Positioning System)-like short range beacons), ultra-sound positioning, BTLE respectively BLE (Bluetooth Low Energy) signals (e.g. High Accuracy Indoor Positioning (HAIP)), and WiFi fingerprinting. What is typical to these solutions is that they require either deployment of totally new infrastructure (beacons, tags and so on) or manual exhaustive radio surveying of buildings including all the floors, spaces and rooms. This is rather expensive and will take a considerable amount of time to build the coverage to the commercial expected level, which in some cases narrowed the potential market segment only to very thin customer base e.g. for health care or dedicated enterprise solutions. Also, the diversity of these technologies makes it difficult to build a globally scalable indoor positioning solution, and the integration and testing will become complex if a large number of technologies needs to be supported in the consumer devices, such as smartphones.

For an indoor positioning solution to be commercially successful, that is 1) being globally scalable, 2) having low maintenance and deployment costs, and 3) offering acceptable end-user experience, the solution needs to be based on an existing infrastructure in the buildings and on existing capabilities in the consumer devices. This leads to an evident conclusion that the indoor positioning needs to be based on WiFi- and/or Bluetooth (BT)-technologies that are already supported in almost every smartphone, tablet, laptop and even in the majority of the feature phones. It is, thus, required to find a solution that uses the WiFi- and BT-radio signals in such a way that makes it possible to achieve 2-3 m horizontal positioning accuracy, close to 100 % floor detection with the ability to quickly build the global coverage for this approach.

A novel approach for radio-based indoor positioning that models e.g. the WiFi-radio environment (or any similar radio e.g. Bluetooth) from observed received signal strength (RSS-) measurements as two-dimensional radio maps is hereby able to capture the dynamics of the indoor radio propagation environment in a compressable and highly accurate way. This makes it possible to achieve unprecedented horizontal positioning accuracy with the WiFi-signals only within the coverage of the created radio maps and also gives highly reliable floor detection.

Huge volumes of indoor WiFi-measurements data could be harvested via crowd-sourcing if the consumer devices were equipped with the necessary functionality to enable the WiFi-data collection, e.g. as a background process, naturally with the end-user consent. It could also be possible to use volunteers to survey the sites (e.g. buildings) in exchange of reward or recognition and get the coverage climbing up globally in the places and venues important for the key customers. However, the technical challenges related to the harvesting, processing, redundancy, ambiguity and storing of the crowd-sourced data need to be understood and solved first, before the WiFi radio map creation can be based on the fully crowd-sourced data.

However, while geo-references for probe data can easily be obtained outdoors, e.g. from GNSS (Global Navigation Satellite System), obtaining geo-references indoors is still a big challenge. For example, geo-references are needed for crowd-sourcing of radio data to support global indoor/outdoor radio-based positioning. Because GNSS does not work indoors, in general, sensor-based solutions quickly diverge in the absence of GNSS fixes. Therefore, any additional source(s) of location information from indoors is of great use.

Many different approaches are proposed in the prior art for resolving the location problem indoors. Most common ones rely on fusion of GNSS and sensor data to extend location estimation to GNSS-denied areas. Other approaches rely on probes collected outdoors to localize probes collected indoors without geo-reference.

### SUMMARY OF SOME EXEMPLARY EMBODIMENTS

It is thus, inter alia, an object of the invention to provide a solution for enabling more accurate location estimates, in particular in indoor scenarios.

According to a first exemplary aspect of the present invention, a method is disclosed, the method comprising:
- obtaining one or more first location estimates, wherein each respective first location estimate of the one or more first location estimates is indicative of at least one first position determined by a mobile device;
- obtaining one or more pieces of optical information, wherein each respective piece of optical information of the one or more pieces of optical information is indicative of at least one optically surveyed area; and/or
- obtaining one or more second location estimates, wherein each respective second location estimate of the one or more second location estimates is indicative of at least one second position of an object estimated at least partially based on one or more pieces of optical information;
   if one or more pieces of optical information are obtained:
   - determining one or more second location estimates at least partially based on the one or more pieces of optical information;
- determining a matching information indicative of whether at least one first position of the one or more first location estimates relatively matches at least one second position of the one or more second location estimates; and
- determining one or more third location estimates, wherein each respective third location estimate of the one or more third location estimates is indicative of a refined position of the respective mobile device, wherein the one or more third location estimates are respectively determined at least partially based on the second location estimates and the one or more first location estimates.

This method may for instance be performed and/or controlled by an apparatus, for instance a server. Alternatively, this method may be performed and/or controlled by more than one apparatus, for instance a server cloud comprising at least two servers. For instance, the method may be performed and/or controlled by using at least one processor of the server, or server cloud.

According to a second exemplary aspect of the present invention, a method is disclosed, the method comprising:
- determining a first location estimate, wherein the first location estimate is indicative of at least one first position determined by the mobile device; and
- providing (e.g. sending or outputting) the first location estimate to an apparatus performing and/or controlling the method according to the first exemplary aspect of the present invention.

This method may for instance be performed and/or controlled by a mobile device.

According to a third exemplary aspect of the present invention, a method is disclosed, the method comprising:
- gathering one or more pieces of optical information; and/or
- determining one or more second location estimates at least partially based on the one or more pieces of optical information, wherein each respective second location estimate of the one or more second location estimates is indicative of at least one second position of an object estimated at least partially based on one or more pieces of optical information indicative of a optically surveyed area; and
- providing (e.g. sending or outputting) the one or more pieces of optical information and/or the one or more second location estimates to an apparatus performing and/or controlling the method according to the first exemplary aspect of the present invention.

This method may for instance be performed and/or controlled by a video-enabled apparatus, e.g. a server coupled to (e.g. connected to) at least one, or a plurality of optical sensor(s) (e.g. video camera(s)), which are configured to gather one or more pieces of optical information. Alternatively, this method may for instance be performed and/or controlled by a video surveillance system.

According to a further exemplary aspect of the invention, a computer program is disclosed, the computer program when executed by a processor causing an apparatus, for instance a server, a mobile device, or a video-enabled apparatus, to perform and/or control the steps or actions of the respective method according to the first, second, or third exemplary aspect of the present invention.

The respective computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect of the invention, an apparatus is disclosed, configured to perform and/or control or comprising respective means for performing and/or controlling the respective method according to the first, second, or third exemplary aspect of the present invention.

The means of the respective apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus, for instance the apparatus, at least to perform and/or to control the respective method according to the first, second, or third exemplary aspect of the present invention.

The above-disclosed apparatus according to any aspect of the invention may be a module or a component for a device, for example a chip. Alternatively, the disclosed apparatus according to any aspect of the invention may be a device, for instance a server or server cloud, a mobile device, or a video-enabled apparatus. The disclosed apparatus according to any aspect of the invention may comprise only the disclosed components, for instance means, processor, memory, or may further comprise one or more additional components.

According to a further exemplary aspect of the invention, a system is disclosed, comprising: at least one apparatus as disclosed above and configured to perform and/or control the method according to the first exemplary aspect of the present invention; one or more mobile devices as disclosed above configured to perform and/or control the method according to the second exemplary aspect of the present invention and configured to provide one or more first location estimates to the at least one apparatus; and at least one video-enabled apparatus as disclosed above configured to perform and/or control the method according to the third exemplary aspect of the present invention and configured to provide one or more pieces of optical information, and/or one or more second location estimates to the at least one apparatus.

In the following, exemplary features and exemplary embodiments of all aspects of the present invention will be described in further detail.

The one or more first location estimates may for instance be obtained, e.g. by receiving the one or more first location estimates, e.g. from one or more mobile devices. The one or more mobile devices may for instance have determined the respective one or more first location estimates, and then provide (e.g. output, or send) them. Alternatively, after determining the one or more first location estimates, the respective one or more mobile devices may for instance store the one or more first location estimates in a database. Then, from the database, the one or more first location estimates may for instance be obtained, e.g. by retrieving the one or more first location estimates from the database.

Each respective first location estimate of the one or more first location estimates is indicative of at least one first position (e.g. of a respective mobile device), which is determined (e.g. estimated) by the respective mobile device. A respective first location estimate may for instance be determined by the respective mobile device at least partially based on various types of location data: e.g. GNSS information, accelerometer information, gyroscope information, magnetometer information, barometer information, WiFi/BLE information, radio map(s), or a combination thereof. Such location data may for instance be utilized to determine a respective first location estimate. Such a first location estimate may for instance be associated with an uncertainty value. In order to determine the most accurate position of a respective mobile device, the method according to the first exemplary aspect in particular enables to refine the first position represented by a respective first location estimate.

The mobile device may for instance be portable (e.g. weigh less than 5, 4, 3, 2, or 1 kg). The mobile device may for instance comprise or be connectable to a display for displaying information, e.g. a route that is guided/navigated to a user, to name but one non-limiting example. The mobile device may for instance comprise or be connectable to means for outputting sound, e.g. in the form of spoken commands or information. The mobile device may for instance comprise or be connectable to one or more sensors for determining the devices position, such as for instance a GNSS receiver, in the form of a GPS receiver. The mobile device may for instance comprise or be connectable to one or more sensors, e.g. in the form of an accelerometer and/or a gyroscope for gathering (e.g. measuring) further information. The mobile device may for instance comprise or be connectable to a receiver and/or a transmitter (e.g. a transceiver) for receiving and/or sending information. The mobile device may for instance be comprised by or be a part of a vehicle (e.g. car, bicycle, scooter, motorbike, e-bike, truck, or the like, to name but a few non-limiting examples). Further, such a mobile device may for instance be represented by circuitry that is designed to implement the required functions, for instance implemented in a chipset or a chip, like an integrated circuit. Such circuitry may for instance be comprised by or be a part of the vehicle.

The area may for instance be a public area equipped with one or more optical sensors, such as a shopping mall, airport, parking area, and/or office. Furthermore, the method according to all exemplary aspects of the present invention may for instance enable a probe collection in such challenging environments, e.g. as parking halls.

The one or more pieces of optical information may for instance be obtained, e.g. by receiving the one or more pieces of optical information, e.g. from the video-enabled apparatus. Such a video-enabled apparatus may for instance be, comprise, or be a part of a video surveillance system, to name but one non-limiting example. The video-enabled apparatus may for instance be connectable to one or more optical sensors (e.g. (video) cameras), which may for instance be configured to gather the one or more pieces of optical information. The one or more pieces of optical information may for instance represent a video, e.g. of the area. In such a video of the area, it is possible e.g. to track one or more objects located within the area. In case the area represented by the one or more pieces of optical information is known, it may for instance be determinable at which (e.g. exact) location an object represented by the one or more pieces of optical information is located. Thus, at least partially based on the one or more pieces of optical information, the one or more second location estimates may for instance be determined.

A respective second location estimate may for instance represent a (second) position of an object that is represented by the one or more pieces of optical information. In reality, the object may for instance be located within the area. The object may for instance carry or be associated with a mobile device. Thus, based on a location of the object derivable from the one or more pieces of optical information, it may for instance be possible to determine a(n) (e.g. exact) position of the mobile device based on an association between the object and a respective mobile device.

The one or more second location estimates may for instance be determined by the apparatus (e.g. a server) performing and/or controlling the method according to the first exemplary aspect of the present invention. Additionally or alternatively, the one or more second location estimates may for instance be determined by the video-enabled apparatus (or the video surveillance system) that gathered the one or more pieces of optical information. In this case, the video-enabled apparatus (or the video surveillance system) may for instance provide the one or more second location estimates so that the one or more second location estimates are obtained, e.g. by receiving the one or more second location estimates, e.g. from the video-enabled apparatus (or the video surveillance system).

The object may for instance be a human or a non-human-object The object may for instance be represented by one or more attributes. More details on such one or more attributes of a respective object are disclosed in the following part of this specification.

It is determined whether at least one first position of the one or more first location estimates relatively matches at least one second position of the one or more second location estimates. A respective result of the determining may for instance be comprised by or represented by the matching information. The term "relatively" as used herein may be understood that a first position is as close to a second position as is defined to consider that the first position and the second position can represent the same mobile device of the first location estimate and be assumed to be e.g. carried by a respective object. Further, the term "relatively" as used herein may be understood that a first position is as close to a second position as is pre-defined or defined according to pre-defined rules by a threshold value or function.

Thus, it may for instance be determined whether or not one or more first positions of the one or more first location estimates can be considered to represent one or more second positions of the one or more second location estimates. The one or more first positions of the one or more first location estimates may for instance be determined by respective one or more mobile devices, while the one or more second positions of the one or more second location estimates may for instance be determined at least partially based on the one or more pieces of optical information.

Further, a plurality (e.g. at least two) of first positions comprised by or represented by the one or more first location estimates may for instance represent positions of the same mobile device. Thus, the respective first location estimates were for instance determined at different times (prior to their obtaining). The respective first location estimates may for instance represent a path or track, along which the respective mobile device has moved. The same may for instance apply to a plurality (e.g. at least two) of second positions comprised by or represented by the one or more second location estimates, which may for instance represent positions of the same object.

Since a respective second position that may for instance be derived from the one or more pieces of optical information may for instance be more accurate than a respective first position of the respective first location estimate of the one or more location estimates, such a respective second position may for instance be used to refine the first location estimate. In this way, a more accurate position represented by the third location estimate of a respective mobile device can be determined.

A respective location estimate (e.g. a first, a second and/or a third location estimate) may for instance be indicative of latitude-, longitude coordinates, or x-, and y-coordinates. Alternatively or additionally, such a respective location estimate may for instance be indicative of an altitude value (e.g. absolute or relative altitude value), a floor level (e.g. of a venue, e.g. comprising the area), an uncertainty value, or a combination thereof. A respective location estimate may for instance represent a position within the (e.g. surveyed) area.

The video-enabled apparatus may for instance track one or more objects (e.g. human (e.g. person) and/or non-human object (e.g. a vehicle, to name but one non-limiting example)) within the area (e.g. a given area within a venue, e.g. a building and/or adjacent areas, to name but a few non-limiting examples). Further, such a tracking may for instance be performed and/or controlled by the server of the first exemplary aspect of the present invention (e.g. at least partially based on the one or more pieces of optical information). Thus, target tracking in a recorded or captured video, e.g. represented by the one or more pieces of optical information, may for instance be performed and/or controlled. Such a tracking may for instance be performed and/or controlled in real-time, or near real-time, e.g. at least partially based on a video stream input represented by the one or more pieces of optical information. The solution according to all exemplary aspects of the present invention may for instance enable to track multiple (e.g. at least two) objects, e.g. at the same time.

One or more mobile devices may for instance have determined the one or more first location estimates, e.g. according to the method of the second exemplary aspect of the present invention. The one or more mobile devices may for instance be in the vicinity of the area, e.g. a given buildings, and possibly carried by the objects being tracked by the video-enabled apparatus, and gather (e.g. collect) various types of location data: GNSS, accelerometer, gyroscope, magnetometer, barometer, WiFi/BLE, UWB (Ultra Wide Band), map, etc. Mobile devices may for instance further estimate their location based on so-called sensor fusion: GNSS + sensor + WiFi/BLE + (radio) map (e.g. depending on whichever is available at the respective mobile device). As a result, a respective mobile device may have several tracks or paths e.g. comprising or containing a set of locations (latitude/longitude/altitude/floor level/uncertainty value, or a combination thereof), and optionally corresponding timestamp information. Such estimated tracks or path of a respective mobile device may for instance be utilized by a server performing and/or controlling the method according to the first exemplary aspect of the present invention.

In case more than one (e.g. at least two) "matches" of first positions and second positions are determined (e.g. found), it will be understood that more than one third location estimates, as described above, may for instance be determined.

The one or more third location estimates are determined at least partially based on the matching information. The matching information may for instance comprise or represent a result of the determining whether or not at least one first position relatively matches at least one second position. In particular, the one or more third location estimates may for instance be determined at least partially based on the at least one second location estimate that relatively matches at least one first location estimate, wherein a respective first position of the at least one first location estimate that was determined to relatively match a respective second position of at least one second location estimate may for instance be refined at least partially based on the at least one second location estimate. It will be understood that the one or more third location estimates may for instance be determined based on all of the one or more first and second location estimates. For instance, after it is determined that at least one first position (relatively) matches at least one second position, all the one or more first and second location estimates (e.g. from the same tracks respectively paths, and additionally or alternatively also the ones which do not match) are used to determine the one or more third location estimates. Further, even if a result (e.g. comprised or represented by the matching information) is that none of the first positions relatively matches one or more of the second positions, the one or more third location estimates may for instance be determined based on all of the one or more first and second location estimates.

According to an exemplary embodiment of the first exemplary aspect of the present invention, the method further comprises:
- outputting the one or more third location estimates.

A respective third location estimate of the one or more third location estimates may for instance be utilized by various further purposes, e.g. by one or more third parties. For instance, a respective third location estimate may be used by a location-based service, for geo-referencing of crowd-sourced radio data, or the like, to name but one few non-limiting example. It will be understood that in order to utilize a respective third location estimate, the respective third location estimate may for instance be output (e.g. send) to a server or server cloud, e.g. of the respective third party.

A respective third location estimate of the one or more third location estimates may for instance be output, e.g. by sending or transmitting the respective third location estimate. The respective third location estimate may for instance be output to one or more other entities, e.g. one or more servers of third parties, e.g. providing location-based services, to name but one non-limiting example. The respective third location estimate that is output may for instance be utilized for various purposes, e.g. to geo-reference the probe data, or geo-reference radio data in particular.

A respective third location estimate of the one or more third location estimates comprises or represents an improved or enhanced position of the respective mobile device.

According to an exemplary embodiment of all exemplary aspects of the present invention, at least two first positions and/or at least two second positions of at least two first and/or second location estimates represent a path respectively track of a respective mobile device and/or object

The path and/or track may for instance represent a way or route along which the respective mobile device and/or object has moved.

Further, the solution according to all exemplary aspects of the present invention may for instance enable to determine (e.g. record or capture, and/or analyze) one or more attributes or features of one or more objects represented by the one or more pieces of optical information (e.g. such as size, shape, color, motion (e.g. path or track) of the respective object. This may for instance enable to combine multiple location estimates and/or tracks of the same object together.

Such a track or path of an object (additionally of alternatively tracks or paths of multiple objects) represented by the one or more second location estimates (e.g. derived from a video-enabled apparatus according to the third exemplary aspect of the present invention) and a track or path of a mobile device (additionally of alternatively tracks or paths of multiple mobile devices) may for instance be compared. If a track or path from the video-enabled apparatus at least partially matches a track or path derived from a mobile device, e.g. spatially and temporally, it may for instance be concluded that the two tracks or paths represent a trajectory of the same object.

Further, one or more paths or tracks may for instance be combined into one or more groups, wherein such a group may for instance correspond to the respective (e.g. same) object, e.g. determined at least partially based on an image/object recognition. The respective group may for instance be considered when determining whether or not at least one first position relatively matches at least one second position.

A comparison may for instance be performed and/or controlled at least partially based on one or more distances between (e.g. time-matched) positions from two paths or tracks. One path or track may for instance be represented by one or more first positions, and another path or track may for instance be represented by one or more second positions. Positions from such two paths or tracks at a time t may for instance be considered to match if one or more respective distances between them are smaller than a pre-defined threshold value, to name but one non-limiting example. Moreover, only positions with an uncertainty value (e.g. associated with the respective first and/or second location estimate) lower than a pre-defined threshold value may for instance be considered. If at least M consecutive positions from one path or track (relatively) match the positions from the other path or track, then the paths or tracks may for instance be considered to correspond to the same object respectively mobile device.

Additionally, other features of the paths or tracks may for instance be matched, e.g. a change of the altitude value, steps made by an object, or the like. For instance:
- it may for instance be determined if a change of altitude (value) (e.g. since the respective object has taken an elevator/escalator) happens (e.g. exactly) at the same time in the path or track represented by the one or more second location estimates (e.g. determined (e.g. estimated) by the video-enabled apparatus), and at the path or track represented by the one or more first location estimates (e.g. determined (e.g. estimated) by a respective mobile device); and/or
- it may for instance be determined if times of steps made by a respective object according to the video-enabled apparatus relatively matches (e.g. exactly) with the times of steps determined (e.g. detected) by a respective mobile device.

According to an exemplary embodiment of all exemplary aspects of the present invention, the path respectively track of a respective object is determined based on one or more attributes of the respective object represented by the one or more pieces of optical information.

A respective piece of the one or more pieces of optical information may for instance represent one or more attributes indicative of a size, a shape, a color, and/or a motion mode of a respective object in case one or more non-human objects are comprised or represented by the one or more pieces of optical information. A respective piece of the one or more pieces of optical information may for instance represent one or more attributes indicative of a height, a color of clothes, and/or a motion mode of a respective object in case of one or more human objects being comprised or represented by the one or more pieces of optical information. Based on such one or more attributes, a tracking of one or more positions of a respective object is enabled. The tracking may for instance be performed and/or controlled at least partially based on at least one respective piece of the one or more pieces of optical information.

According to an exemplary embodiment of all exemplary aspects of the present invention, a respective first location estimate of the one or more first location estimates and/or a respective second location estimate of the one or more second location estimates is associated with or comprises a first and/or second timestamp information indicative of a time and/or date at which the respective first location estimate of the one or more first location estimates and/or a respective second location estimate of the one or more second location estimates was gathered.

The gathering of a respective first location estimate of the one or more first location estimates and/or a respective second location estimate of the one or more second location estimates may for instance have taken place prior to the obtaining of the respective first and/or second location estimates. A respective first location estimate of the one or more first location estimates and/or a respective second location estimate of the one or more second location estimates may for instance comprise or be associated with a first and/or a second timestamp information.

According to an exemplary embodiment of all exemplary aspects of the present invention, the one or more third location estimates are determined in case (e.g. only if) the at least one first position of the one or more first location estimates relatively matches at least one second position of the one or more second location estimates.

The respective (first and/or second) location estimates may for instance be considered to determine a respective third location estimate only in case a respective first timestamp information comprised by or associated with a respective first location estimate relatively matches - within the meaning of the present invention as disclosed above - a respective second timestamp information comprised by or associated with a respective second location estimate.

According to an exemplary embodiment of the first exemplary aspect of the present invention, the method further comprises:
- determining whether or not a respective first timestamp information associated with or comprised by at least one first location estimate which represented the at least one first position that relatively matches at least one second position of the one or more second location estimates is equal to or within a pre-defined timestamp threshold value by a comparison of the respective first timestamp information to a respective second timestamp information associated with or comprised by the respective at least one second location estimate comprising or representing the at least one second position; and
   in case the respective pieces of timestamp information are not equal to each other or within the pre-defined timestamp threshold value:
   - discarding these respective first and second location estimates.

In this way, it may for instance be determined whether or not a respective first position comprised or represented by a respective first location estimate that relatively matches a respective second position comprised or represented by a respective second location estimate were determined at the same (or within the pre-defined timestamp threshold value) time and/or date.

Further, it may for instance be enabled (e.g. as an additional requirement) that respective clocks of the respective mobile device and the video-enabled apparatus are synchronized with sufficient accuracy. Since a respective first location estimate may for instance be determined by a respective mobile device, and a respective second location estimate may for instance be determined by or be determined at least partially based on one or more pieces of optical information gathered by the video-enabled apparatus, a timestamp information may for instance be associated with a respective location estimate, wherein the respective timestamp information is generated based on a clock e.g. comprised by or connectable to the respective mobile device, and/or the respective video-enabled apparatus.

The accuracy, which is considered as sufficient, may for instance depend on the application: a maximum allowed time difference between the both apparatuses - a respective mobile device and the video-enabled apparatus - may for instance be equal to or less than, e.g. 1 second.

Further, it may for instance be possible to e.g. compare one or more first location estimates and one or more second location estimates even if respective pieces of first and/or second timestamp information are set based on respective clocks of the video-enabled apparatus (e.g. video surveillance system) and a respective mobile devices are not synced. This may for instance require assuming that the difference between the clocks remains approximately constant. In such a case, a time offset may for instance be determined (e.g. estimated), e.g. as a part of the determining whether or not at least one first position relatively matches at least one second position (e.g. as a part of a path or track matching operation). This may for instance be realized e.g. by determining whether or not a respective first position and its associated first timestamp information relatively matches with multiple different values for an assumed time offset. In this way, an estimate for a respective time offset may for instance be determined. Such a time offset may for instance be used to compensate a time difference, e.g. when performing and/or controlling a probe geo-referencing (e.g. as a various purpose for which a respective third location estimate can be utilized).

Further, if at least one respective first position of the one or more first location estimate(s) does not match with at least one respective second position of the one or more second location estimate(s) time-wise (e.g. by comparing respective pieces of timestamp information, as disclosed above), it may for instance still be possible to compare respective (first) positions comprised or represented by the one or more first location estimate(s) with some (e.g. other set of) one or more second location estimate(s), and vice versa. For instance, even if no match of respective positions of the one or more first location estimates and the one or more second location estimates is/are found, one or more third location estimates may for instance still be determined. In case a match (e.g. matching locations) is (are) found (e.g. comprised or represented by a respective matching information), such a matching location(s) is (are) indicating that two tracks or paths (e.g. one comprising or consisting of first positions, e.g. represented by the one or more first location estimates, and another comprising or consisting of second positions, e.g. represented by the one or more second location estimates) belong to the same object and hence mobile device.

According to an exemplary embodiment of the first exemplary aspect of the present invention, the method further comprises:
- identifying a respective mobile device at least partially based on an identification information indicative of a unique identifier of the respective mobile device that is located at the at least one first position of the one or more first location estimates, wherein the at least one first position relatively matches at least one second position of the one or more second location estimates (e.g. comprised by or represented by the matching information); and
- associating a respective object located at the at least one second position with the respective mobile device at least partially based on the respective identification information.

For instance, once at least one matching position (or (a) respective path(s) or track(s)) represented by respective location estimates from a respective video-enabled apparatus (performing and/or controlling the method according to the third exemplary aspect of the present invention) and a respective mobile device (performing and/or controlling the method according to the second exemplary aspect of the present invention) are determined (e.g. found), a respective identification information (e.g. indication of a device ID, MAC (Medium Access Control) address, or the like, to name but one non-limiting example) indicative of information enabling identification of a respective mobile device may for instance be associated with a respective identification information (e.g. object ID, or set of one or more attribute information, as disclosed above) indicative of information enabling identification of a respective object, the at least one second position of the respective object may for instance be associated with a respective mobile device, and/or vice versa.

Positions of the respective object determined at least partially based on one or more pieces of optical information gathered by the video-enabled apparatus can be considered - in many cases - to be more accurate than one or more first location estimates determined by a respective mobile device itself. Hence, one or more second location estimates (e.g. "video-based estimates") may for instance improve the accuracy of one or more first location estimates of respective mobile devices.

According to an exemplary embodiment of all exemplary aspects of the present invention, a respective first and/or second location estimate of the one or more first and/or second location estimates is further indicative of an altitude, floor, uncertainty value, or a combination thereof.

According to an exemplary embodiment of the first exemplary aspect of the present invention, the determining whether at least one first position relatively matches at least one second position further comprises:
- determining a distance between a respective location estimate of the at least one first position and the at least one second position; and/or
- determining an uncertainty value associated with a respective location estimate of the at least one first position and the at least one second position; and
- comparing the determined distance and/or uncertainty value with a pre-defined distance and/or uncertainty threshold value,
   wherein in case the distance and/or uncertainty value are not within the pre-defined distance and/or uncertainty threshold value:
   - discarding the respective first and/or second location estimates.

Thus, whether or not at least one first position relatively matches at least one second position may for instance be determined in a spatially and temporally dimension. Only if both relatively match (thus, are equal to or below a pre-defined threshold value), it is assumed that the respective mobile device of the respective first location estimate representing the respective first position is associated with the respective object of the respective second location estimate representing the respective second positon.

In this way, mobile device localization may for instance be greatly improved. Further, probe geotagging in indoor areas may for instance be improved as well, in particular in public buildings, parking spaces, etc. to name but a few non-limiting examples.

The features and example embodiments of the invention described above may equally pertain to the different aspects according to the present invention.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a schematic block diagram of a system according to an exemplary aspect of the present invention;
- Fig. 2: a flowchart showing an example embodiment of a method according to the first exemplary aspect of the present invention;
- Fig. 3: a flowchart showing an example embodiment of a method according to the second exemplary aspect of the present invention;
- Fig. 4: a flowchart showing an example embodiment of a method according to the third exemplary aspect of the present invention;
- Fig. 5: a schematic block diagram of an apparatus configured to perform the method according to the first exemplary aspect of the present invention;
- Fig. 6: a schematic block diagram of an apparatus configured to perform the method according to the second exemplary aspect of the present invention; and
- Fig. 7: a schematic block diagram of an apparatus configured to perform the method according to the third exemplary aspect of the present invention.

### DETAILED DESCRIPTION OF SOME EXEMPLARY EMBODIMENTS

The following description serves to deepen the understanding of the present invention and shall be understood to complement and be read together with the description as provided in the above summary section of this specification.

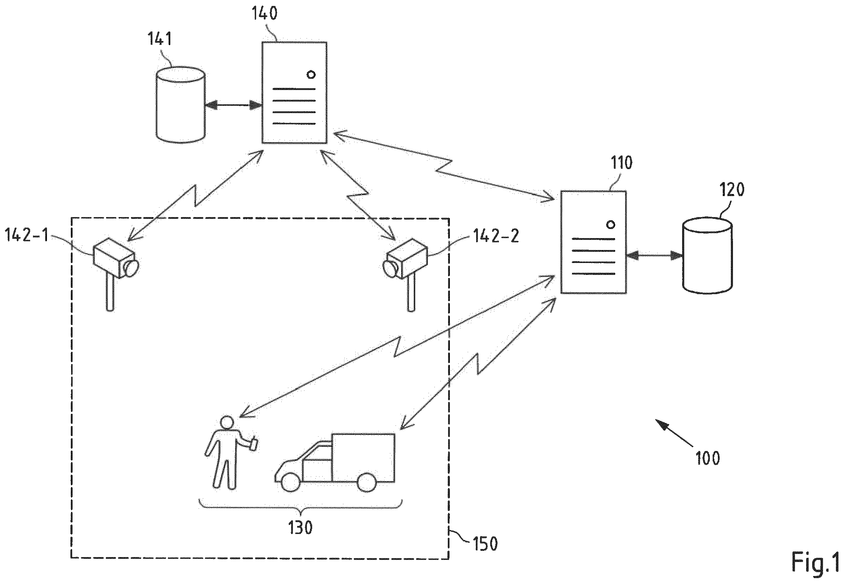

Fig. 1 is a schematic high-level block diagram of a system 100 according to an exemplary aspect of the present invention. Such a system 100 may for instance represent a generic system architecture which may for instance be utilized by example embodiments of the present invention.

System 100 comprises a server 110, an optional database 120, a video-enabled apparatus (respectively another server) 140, another optional database 141, and at least one camera, wherein in Fig. 1 two of such cameras 142-1, 142-2 are exemplary shown. The video-enabled apparatus 140, the optional database 141, and the at least one camera may for instance embody a video surveillance system, e.g. for surveying the area 150. Further, system 100 comprises an object located within the area 150, wherein two exemplary embodiments of such an object are shown: i) a non-human object, e.g. in the form of a vehicle, and ii) a human object. Further, within the area 150, one or more mobile devices, from which one mobile device 130 is carried by the human or located within the vehicle, can be located. Such one or more mobile devices may for instance be comprised by system 100 as well.

The mobile device 130 may for instance be embodied as a smartphone, tablet, wearable, portable navigation device, IoT (Internet-of-Things) device, or may be comprised, be a part of, or be embedded into a vehicle, to name but a few non-limiting examples.

The server 110, and/or the video-enabled apparatus 140 may for instance be embodied as a server cloud (e.g. a plurality of servers connected, e.g. via the Internet and providing one or more services at least partially jointly). The server 110 and/or the video-enabled apparatus 140 may for instance be connected, e.g. via a communication network (e.g. cellular communication network) e.g. to each other, and/or to the one or more mobile devices 130, to the optional database 120 and/or database 141, and/or to the cameras 142-1, 142-2.

The database 120 may for instance be comprised by or connectable to the server 110. The database 120 may for instance comprise a memory, e.g. for storing one or more first location estimates, one or more second location estimates, one or more pieces of optical information, one or more third location estimates, or a combination thereof, to name but a few non-limiting examples.

The database 141 may for instance be comprised by or connectable to the video-enabled apparatus 140. The database 141 may for instance comprise a memory, e.g. for storing one or more first location estimates, one or more second location estimates, one or more pieces of optical information, one or more third location estimates, or a combination thereof, to name but a few non-limiting examples.

The server 110 may for instance be configured to perform and/or control the method according to the first exemplary aspect of the present invention.

A (or each) respective mobile device of the one or more mobile devices 130 may for instance be configured to perform and/or control the method according to the second exemplary aspect of the present invention.

The video-enabled apparatus 140 may for instance be configured to perform and/or control the method according to the third exemplary aspect of the present invention.

Example embodiments according to all exemplary aspects of the present invention enable to determine whether a first position of a mobile device (e.g. one of the mobile devices 130) (relatively) matches a second position of an object (within the area 150), and utilizing the second position of the object (e.g. carrying the respective mobile device) determined at least partially based on one or more pieces of optical information gathered by at least one of the cameras 142-1, 142-2 to refine a first location estimate representing the first position of the mobile device (within the area 150), or to determine one or more (e.g. new) more accurate location estimates of the mobile device 130.

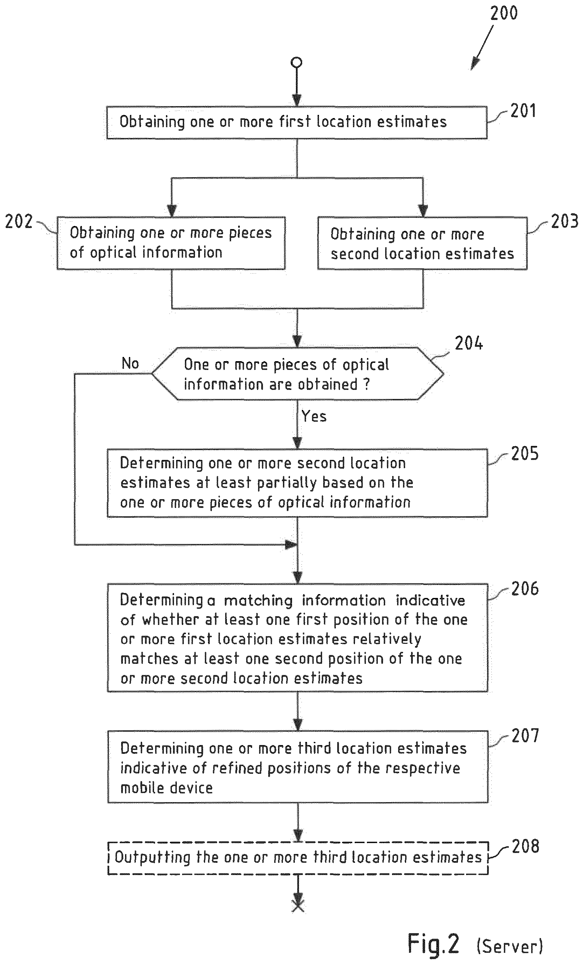

Fig. 2 is a flowchart 200 showing an example embodiment of a method according to the first exemplary aspect of the present invention. This flowchart 200 may for instance be performed by a server, e.g. server 110 of Fig. 1.

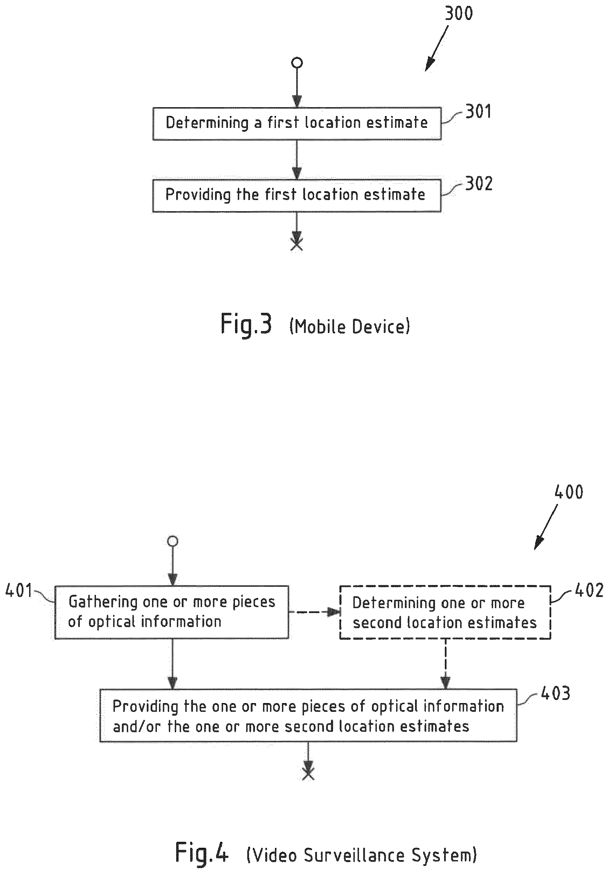

In a first step 201, one or more first location estimates are obtained, e.g. by receiving the one or more first location estimates from one or more mobile devices (e.g. mobile device(s) 130 of Fig. 1; see step 302 of Fig. 3 as well).

In a second step 202, one or more pieces of optical information are obtained, e.g. by receiving the one or more pieces of optical information from a video-enabled apparatus (e.g. video-enabled apparatus 140 of Fig. 1; see step 403 of Fig. 4 as well).

In a third step 203, one or more second location estimates are obtained, e.g. by receiving the one or more first location estimates from a video-enabled apparatus (e.g. video-enabled apparatus 140 of Fig. 1; see step 403 of Fig. 4 as well).

It will be understood that steps 202 and 203 may for instance both be performed and/or controlled. Alternatively, only step 202 or step 203 may for instance be performed and/or controlled.

In a fourth step 204, it is checked whether or not one or more pieces of optical information were obtained in step 202. In case one or more pieces of optical information were obtained, in a fifth step 205 one or more second location estimates are determined at least partially based on the one or more pieces of optical information. This step 205 may for instance not be performed and/or controlled in case in step 203 one or more second location estimates are obtained, and in step 202 no pieces of optical information were obtained, or step 202 was not performed and/or controlled at all.

In a sixth step 206, it is determined whether at least one first position of the one or more first location estimates relatively matches at least one second position of the one or more second location estimates. A respective result of the determining may for instance be comprised by or represented by the matching information.

In case such a match is found in step 206, in a seventh step 207, one or more third location estimates are determined, wherein a respective third location estimate of the one or more third location estimates is indicative of a refined position of a respective mobile device (e.g. one of the mobile devices 130 of Fig. 1). Further, even if in step 206 no match is found, one or more third location estimates may for instance be determined in the same way. In case in step 206 a match (e.g. matching locations) is found, such a matching location is respectively matching locations are indicating that two tracks or paths (e.g. one consisting of first positions, e.g. represented by the one or more first location estimates, and another consisting of second positions, e.g. represented by the one or more second location estimates) belong to the same object (e.g. an object location in the area 150 of Fig. 1) and hence mobile device (e.g. mobile device 130 of Fig. 1).

In an optional eighth step 208, the third location estimate (of step 207) is output, e.g. by sending respectively transmitting the third location estimate to another entity (not shown in the system 100 of Fig. 1), which may for instance utilize the third location estimate. Such another entity may for instance be a server or server cloud of a third party, e.g. a location-based service, to name but one non-limiting example.

Fig. 3 is a flowchart 300 showing an example embodiment of a method according to the second exemplary aspect of the present invention. This flowchart 300 may for instance be performed by a mobile device, e.g. one of the mobile devices 130 of Fig. 1.

In a first step 301, a first location estimate is determined. The first location estimate may for instance be determined, e.g. based on one or more pieces of information gathered (e.g. measured) by one or more sensors comprised by the mobile device, such as e.g. an accelerometer sensor, a GNSS (e.g. a GPS) sensor, a barometric sensor, a magnetometer sensor, a gyroscope sensor, or a combination thereof e.g. to gather respective one or more pieces of information.

In a second step 302, the determined first location estimate is provided, e.g. by outputting (e.g. sending) the determined first location estimate, e.g. to server 110 of Fig. 1. Alternatively, the first location estimate may for instance be output to another entity that is different from the server 110 of Fig. 1, which relays the first location estimate to the server 110 (upon reception of it).

Fig. 4 is a flowchart 400 showing an example embodiment of a method according to the third exemplary aspect of the present invention. This flowchart 400 may for instance be performed by a video-enabled apparatus, e.g. video-enabled apparatus (respectively server) 140 of Fig. 1.

In a first step 401, one or more pieces of optical information are gathered (e.g. recorded or captured), e.g. by one or more (video) cameras (e.g. cameras 142-1, 142-2 of Fig. 1). Such cameras may for instance monitor respectively survey an area (e.g. area 150 of Fig. 1, e.g. an area within a building, parking lot, public accessible building, shopping mall, airport, station or the like, to name but a few non-limiting examples).

In an optional second step 402, one or more second location estimates are determined, e.g. at least partially based on the one or more pieces of optical information (gathered in step 401). In case step 402 is not performed and/or controlled, the determining of the one or more second location estimates may for instance be performed and/or controlled by server 110 of Fig. 1 at least partially based on provided one or more pieces of optical information (see step 205 of Fig. 2). The one or more second location estimates may for instance be indicative of one or more (second) positions of one or more objects located within the area, which may for instance be derived from the one or more pieces of optical information that are e.g. gathered by one or more cameras surveying respectively monitoring the area.

In a third step 403, the one or more pieces of optical information (gathered in step 401), and/or the optionally determined one or more second location estimates (of step 402) are provided, e.g. by outputting (e.g. sending) the one or more pieces of optical information and/or the optionally determined one or more second location estimates, e.g. to server 110 of Fig. 1. Alternatively, the one or more pieces of optical information and/or the optionally determined one or more second location estimates may for instance be output to another entity that is different from the server 110 of Fig. 1, which relays the one or more pieces of optical information and/or the optionally determined one or more second location estimates to the server 110 (upon reception of it).

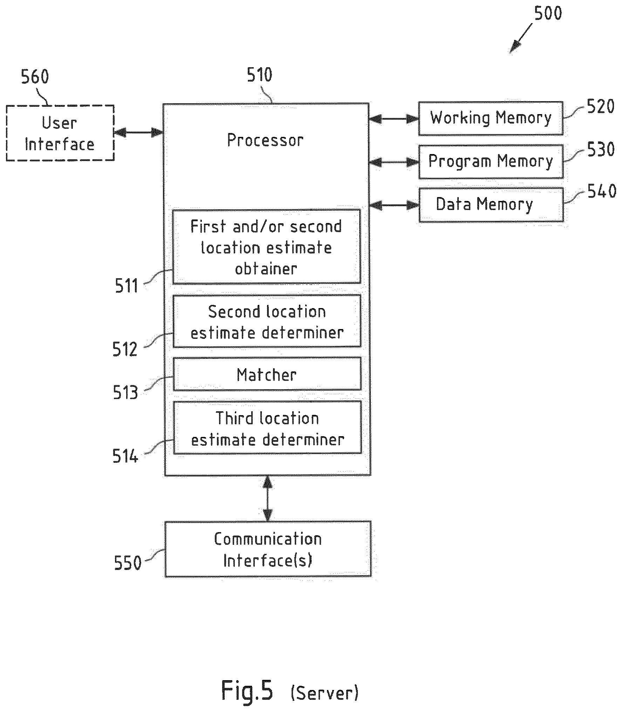

Fig. 5 is a schematic block diagram of an apparatus 500 according to an exemplary aspect of the present invention, which may for instance represent the server 110 of Fig. 1.

Apparatus 500 comprises a processor 510, working memory 520, program memory 530, data memory 540, communication interface(s) 550, and an optional user interface 560.

Apparatus 500 may for instance be configured to perform and/or control or comprise respective means (at least one of 510 to 560 for performing and/or controlling the method according to the first exemplary aspect of the present invention. Apparatus 500 may as well constitute an apparatus comprising at least one processor (510) and at least one memory (520) including computer program code, the at least one memory and the computer program code configured to, with the at least one processor, cause an apparatus, e.g. apparatus 500 at least to perform and/or control the method according to the first exemplary aspect of the invention of the present invention.

Processor 510 may for instance comprise a first and/or second location estimate obtainer 511 as a functional and/or structural unit. First and/or second location estimate obtainer 511 may for instance be configured to obtain (e.g. receive) a first and/or second location estimate (see step 201 and/or step 203 of Fig. 2).

Processor 510 may for instance comprise a second location estimate determiner 512 as a functional and/or structural unit. Second location estimate determiner 512 may for instance be configured to determine a second location estimate determiner (see step 205 of Fig. 2).

Processor 510 may for instance comprise a matcher 513 as a functional and/or structural unit Matcher 513 may for instance be configured to determine whether at least one first position of one or more first location estimates relatively matches at least one second position of one or more second location estimates (see step 206 of Fig. 2).

Processor 510 may for instance comprise a third location estimate determiner 514 as a functional and/or structural unit. Third location estimate determiner 514 may for instance be configured to determine a third location estimate (see step 207 of Fig. 2).

Processor 510 may for instance further control the memories 520 to 540, the communication interface(s) 550, and the optional user interface 560.

Processor 510 may for instance execute computer program code stored in program memory 530, which may for instance represent a computer readable storage medium comprising program code that, when executed by processor 510, causes the processor 510 to perform the method according to the first exemplary aspect of the present invention.

Processor 510 (and also any other processor mentioned in this specification) may be a processor of any suitable type. Processor 510 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 510 may for instance be an application processor that runs an operating system.

Program memory 530 may also be included into processor 510. This memory may for instance be fixedly connected to processor 510, or be at least partially removable from processor 510, for instance in the form of a memory card or stick. Program memory 530 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 530 may also comprise an operating system for processor 510. Program memory 530 may also comprise a firmware for apparatus 500.

Apparatus 500 comprises a working memory 520, for instance in the form of a volatile memory. It may for instance be a Random Access Memory (RAM) or Dynamic RAM (DRAM), to give but a few non-limiting examples. It may for instance be used by processor 510 when executing an operating system and/or computer program.

Data memory 540 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 540 may for instance store one or more first location estimates, one or more second location estimates, one or more pieces of optical information, one or more third location estimates, or a combination thereof, to name but a few non-limiting examples.

Communication interface(s) 550 enable apparatus 500 to communicate with other entities, e.g. with server video-enabled apparatus 140 of Fig. 1, and/or with one or more mobile device 130, e.g. carried by a human and/or an object of Fig. 1. The communication interface(s) 550 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable apparatus 500 to communicate with other entities.

User interface 560 is optional and may comprise a display for displaying information to a user and/or an input device (e.g. a keyboard, keypad, touchpad, mouse, etc.) for receiving information from a user.

Some or all of the components of the apparatus 500 may for instance be connected via a bus. Some or all of the components of the apparatus 500 may for instance be combined into one or more modules.

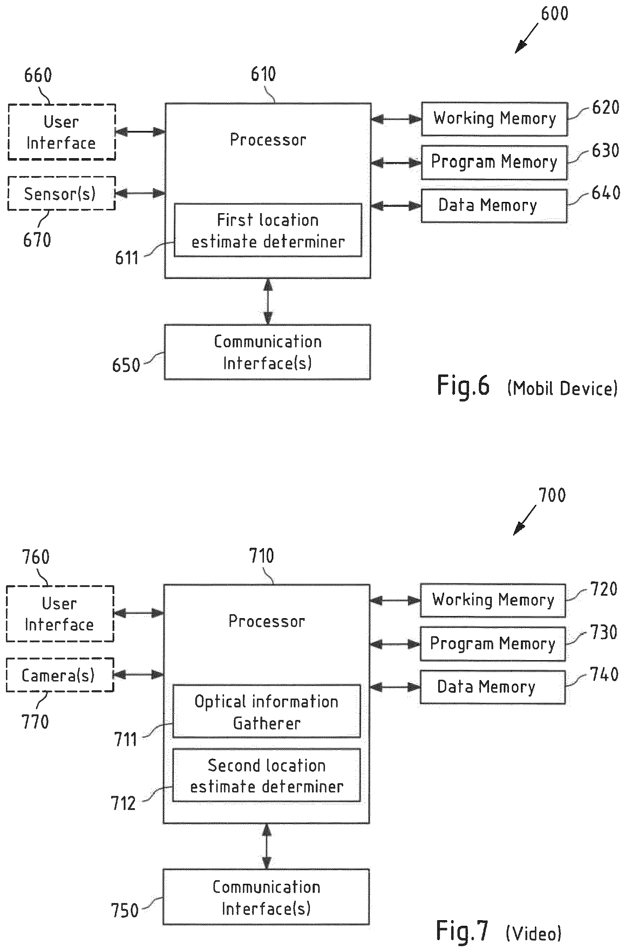

Fig. 6 is a schematic block diagram of an apparatus 600 according to an exemplary aspect of the present invention, which may for instance represent the mobile device 130 carried by a human and/or an object of Fig. 1.

Apparatus 600 comprises a processor 610, working memory 620, program memory 630, data memory 640, communication interface(s) 650, an optional user interface 660 and an optional sensor(s) 670.

Apparatus 600 may for instance be configured to perform and/or control or comprise respective means (at least one of 610 to 670) for performing and/or controlling the method according to the second exemplary aspect of the present invention. Apparatus 600 may as well constitute an apparatus comprising at least one processor (610) and at least one memory (620) including computer program code, the at least one memory and the computer program code configured to, with the at least one processor, cause an apparatus, e.g. apparatus 600 at least to perform and/or control the method according to the second exemplary aspect of the invention of the present invention.

Processor 610 may for instance comprise first location estimate determiner 611 as a functional and/or structural unit. First location estimate determiner 611 may for instance be configured to determine a first location estimate (see step 301 of Fig. 3). Processor 610 may for instance further control the memories 620 to 640, the communication interface(s) 650, the optional user interface 660 and the optional sensor(s) 670.

Processor 610 may for instance execute computer program code stored in program memory 630, which may for instance represent a computer readable storage medium comprising program code that, when executed by processor 610, causes the processor 610 to perform the method according to the second exemplary aspect of the present invention.

Processor 610 (and also any other processor mentioned in this specification) may be a processor of any suitable type. Processor 610 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 610 may for instance be an application processor that runs an operating system.

Program memory 630 may also be included into processor 610. This memory may for instance be fixedly connected to processor 610, or be at least partially removable from processor 610, for instance in the form of a memory card or stick. Program memory 630 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 630 may also comprise an operating system for processor 610. Program memory 630 may also comprise a firmware for apparatus 600.

Apparatus 600 comprises a working memory 620, for instance in the form of a volatile memory. It may for instance be a Random Access Memory (RAM) or Dynamic RAM (DRAM), to give but a few non-limiting examples. It may for instance be used by processor 610 when executing an operating system and/or computer program.

Data memory 640 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 640 may for instance store one or more first location estimates, one or more second location estimates, one or more pieces of optical information, one or more third location estimates, or a combination thereof, to name but a few non-limiting examples.

Communication interface(s) 650 enable apparatus 600 to communicate with other entities, e.g. with server 110 of Fig. 1. The communication interface(s) 650 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable apparatus 600 to communicate with other entities.

User interface 660 is optional and may comprise a display for displaying information to a user and/or an input device (e.g. a keyboard, keypad, touchpad, mouse, etc.) for receiving information from a user.

Sensor(s) 670 are optional and may for instance comprise an accelerometer sensor, a GNSS (e.g. a GPS) sensor, a barometric sensor, a magnetometer sensor, a gyroscope sensor, or a combination thereof e.g. to gather respective information which may for instance be a basis for determining a first location estimate.

Some or all of the components of the apparatus 600 may for instance be connected via a bus. Some or all of the components of the apparatus 600 may for instance be combined into one or more modules.

Fig. 7 is a schematic block diagram of an apparatus 700 according to an exemplary aspect of the present invention, which may for instance represent the video-enabled apparatus 140 of Fig. 1.

Apparatus 700 comprises a processor 710, working memory 720, program memory 730, data memory 740, communication interface(s) 750, an optional user interface 760 and (an) optional camera(s) 770.

Apparatus 700 may for instance be configured to perform and/or control or comprise respective means (at least one of 710 to 770) for performing and/or controlling the method according to the third exemplary aspect of the present invention. Apparatus 700 may as well constitute an apparatus comprising at least one processor (710) and at least one memory (720) including computer program code, the at least one memory and the computer program code configured to, with the at least one processor, cause an apparatus, e.g. apparatus 700 at least to perform and/or control the method according to the third exemplary aspect of the invention of the present invention.

Processor 710 may for instance comprise an optical information gatherer 711 as a functional and/or structural unit. Optical information gatherer 711 may for instance be configured to gather (e.g. record) one or more pieces of optical information (see step 401 of Fig. 4).

Processor 710 may for instance comprise an optional second location estimate determiner 712 as a functional and/or structural unit. Optional second location estimate determiner 712 may for instance be configured to determine one or more second location estimates (see step 402 of Fig. 4).

Processor 710 may for instance further control the memories 720 to 740, the communication interface(s) 750, the optional user interface 760 and the optional sensor(s) 770.

Processor 710 may for instance execute computer program code stored in program memory 730, which may for instance represent a computer readable storage medium comprising program code that, when executed by processor 710, causes the processor 710 to perform the method according to the third exemplary aspect of the present invention.

Processor 710 (and also any other processor mentioned in this specification) may be a processor of any suitable type. Processor 710 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 710 may for instance be an application processor that runs an operating system.

Program memory 730 may also be included into processor 710. This memory may for instance be fixedly connected to processor 710, or be at least partially removable from processor 710, for instance in the form of a memory card or stick. Program memory 730 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 730 may also comprise an operating system for processor 710. Program memory 730 may also comprise a firmware for apparatus 700.

Apparatus 700 comprises a working memory 720, for instance in the form of a volatile memory. It may for instance be a Random Access Memory (RAM) or Dynamic RAM (DRAM), to give but a few non-limiting examples. It may for instance be used by processor 710 when executing an operating system and/or computer program.

Data memory 740 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 740 may for instance store one or more first location estimates, one or more second location estimates, one or more pieces of optical information, one or more third location estimates, or a combination thereof, to name but a few non-limiting examples.

Communication interface(s) 750 enable apparatus 700 to communicate with other entities, e.g. with server 110 of Fig. 1, with one or more cameras (e.g. cameras 142-1, 142-2 of Fig. 1). The communication interface(s) 750 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable apparatus 700 to communicate with other entities.

User interface 760 is optional and may comprise a display for displaying information to a user and/or an input device (e.g. a keyboard, keypad, touchpad, mouse, etc.) for receiving information from a user.

Camera(s) 770 are optional and may for instance be configured to gather one or more pieces of optical information, which may for instance be a basis to determine one or more second location estimates.

Some or all of the components of the apparatus 700 may for instance be connected via a bus. Some or all of the components of the apparatus 700 may for instance be combined into one or more modules.

The following embodiments shall also be considered to be disclosed:
It is proposed a method to use tracking-capable video surveillance systems together with other location data sources such as GNSS, sensors and (indoor) maps to improve localization of mobile devices, especially in indoor areas.

Nowadays, almost all public buildings are equipped with video surveillance systems. Also, there are methods for video-based target tracking. These systems can recognize and track specific objects, such as a person or a vehicle, but not identify a device possibly carried by the person. However, for localizing the device with the help of external video-based location tracking, one need to associate the device (e.g. the device ID) with a tracked object carrying that device.

It is proposed to:
i) Identify which device the tracked object carries (e.g. unique device ID) by matching the locations estimated by the device itself and locations of a person/vehicle estimated by a tracking system;
ii) Associate the locations of the person/vehicle determined by video tracking system with the identified device;
iii) Use location estimates from the video tracking system to improve location estimates of the device; and
iv) The improved location estimated can be used for various purposes, e.g. generation of geo-referenced radio measurements from indoors.
This approach may be especially beneficial in the public areas equipped with video surveillance systems, shopping malls, airports, parking areas, office. Further, this approach may solve the problem of probe collection in such challenging environments as parking halls.

To realize e.g. the aforementioned method, it is proposed a system comprising:
- Video surveillance system;
- One or more mobile devices;
- Server that receives and processes data from the video surveillance system and mobile devices.

An additional requirement is that the clocks of the device and the video tracking system must be synchronized with sufficient accuracy. The sufficient accuracy depends on the application; the maximum allowed time difference between the systems could be less than, say, 1 second.

To realize the proposed method the following may for instance be done:
1) Video surveillance system tracks objects (e.g. person/vehicle) within a given area, e.g. a building and adjacent areas. The domain of video tracking is well-established, and there are number of known methods for target tracking based on the video stream input. The system may track multiple objects at the same time. Along with track estimation system may also record the features of the object such as size, shape, color, in order to combine multiple tracks of the same object together. As a result each track may contain the following attributes:
   a) Object attributes:
      i) Non-human: size, shape, color, motion mode;
      ii) Human: height color of clothes, motion mode.
   b) Set of locations (latitude/longitude/altitude/floor level or ID/uncertainty) and timestamps.
      Tracks can further be combined into groups corresponding to the same object based on image/object recognition.

Video surveillance system sends tracks of the objects to the server.
2) Devices in the vicinity of given buildings, and possibly carried by the objects being tracked by the video system, collect various types of location data: GNSS, accelerometer, gyroscope, magnetometer, barometer, WiFi/BLE, UWB (Ultra Wide Band), map, etc. Devices further estimate location based on sensor fusion: GNSS+sensor+WiFi/BLE+map (depending on whichever is available). As a result, each device may have several tracks containing set of locations (latitude/longitude/altitude/floor level or ID/uncertainty) and corresponding timestamps. Estimated tracks of each device are sent to the server.
3) Tracks of multiple objects from video system and tracks of multiple mobile devices are compared at the server. If a track from the video system at least partially matches a track from a device, spatially and temporally, it can be concluded that the two tracks represent trajectory of the same object.
   The comparison is based on distances between time-matched locations from two tracks. Locations from two tracks at time t match if distance between them is smaller than a pre-defined threshold. Moreover, only locations with uncertainty lower than pre-defined threshold are considered. If at least M consecutive locations from one track match the locations from the other track, then the tracks correspond to the same object. Additionally, other feature of the tracks can be matched, e.g. change of the altitude, steps made by an object, for example
   - If altitude change (by elevator/escalator) happens exactly at the same time in the track estimated by the video system, and at the track estimated by the device.
   - If times of steps made by the object according to the video system match exactly with the times of steps detected by the device.
4) Once matching tracks from video system and device are found, device ID can be associated with the object ID (set of attributes), and hence locations of the object can be associated with the device and vice versa. Locations of the object form the video tracking system are in many cases more accurate than location estimates from the device itself, and hence video-based estimates can improve the accuracy of location estimates of the device. This can be done by computing the device location estimates using the data collected at step 2) and locations of the corresponding object from the video tracking system.
5) Improved locations of the device can be used further for various purposes. For example, to geo-reference the probe data, or geo-reference radio data in particular.

Further, it is also possible to use data even if the clocks of the video surveillance system and the mobile devices are not synced assuming the difference between the time systems remain approximately constant. In such a case, the time offset can be estimated as a part of the track matching operation. This could be realized e.g. by trying to match the measured positions with multiple different values for the assumed time system offset This way we also get an estimate for the time offset, which can be used to compensate the time difference when doing the probe geo-referencing.

In this way, device localization may for instance be greatly improved. Further, probe geotagging in indoor areas may for instance be improved as well, in particular in public buildings, parking spaces, etc. to name but a few non-limiting examples.

### Embodiment 1:

An apparatus comprising at least one processor and at least one memory including computer program code, the at least one memory and the computer program code configured to, with the at least one processor, cause the apparatus to at least perform:
- obtaining one or more first location estimates, wherein each respective first location estimate of the one or more first location estimates is indicative of at least one first position determined by a mobile device;
- obtaining one or more pieces of optical information, wherein each respective piece of optical information of the one or more pieces of optical information is indicative of at least one optically surveyed area; and/or
- obtaining one or more second location estimates, wherein each respective second location estimate of the one or more second location estimates is indicative of at least one second position of an object estimated at least partially based on one or more pieces of optical information;
   if one or more pieces of optical information are obtained:
   - determining one or more second location estimates at least partially based on the one or more pieces of optical information;
   - determining a matching information indicative of whether at least one first position of the one or more first location estimates relatively matches at least one second position of the one or more second location estimates; and
   - determining one or more third location estimates, wherein each respective third location estimate of the one or more third location estimates is indicative of a refined position of the respective mobile device, wherein the one or more third location estimates are respectively determined at least partially based on the second location estimates and the one or more first location estimates.

### Embodiment 2:

The apparatus according to embodiment 1, the at least one memory and the computer program code configured to, with the at least one processor, cause the apparatus further to perform:
- outputting the one or more third location estimates.

### Embodiment 3:

The apparatus according to any of the preceding embodiments, wherein at least two first positions and/or at least two second positions of at least two first and/or second location estimates represent a path respectively track of a respective mobile device and/or object

### Embodiment 4:

The apparatus according to embodiment 3, wherein the path respectively track of a respective object is determined based on one or more attributes of the respective object represented by the one or more pieces of optical information.

### Embodiment 5:

The apparatus according to any of the preceding embodiments, wherein a respective first location estimate of the one or more first location estimates and/or a respective second location estimate of the one or more second location estimates is associated with or comprises a first and/or second timestamp information indicative of a time and/or date at which the respective first location estimate of the one or more first location estimates and/or a respective second location estimate of the one or more second location estimates was gathered.

### Embodiment 6:

The apparatus according to any of the preceding embodiments, wherein the one or more third location estimates are determined in case the at least one first position of the one or more first location estimates relatively matches at least one second position of the one or more second location estimates.

### Embodiment 7:

The apparatus according to any of the preceding embodiments, the at least one memory and the computer program code configured to, with the at least one processor, cause the apparatus further to perform:
- determining whether or not a respective first timestamp information associated with or comprised by at least one first location estimate which represented the at least one first position that relatively matches at least one second position of the one or more second location estimates is equal to or within a pre-defined timestamp threshold value by a comparison of the respective first timestamp information to a respective second timestamp information associated with or comprised by the respective at least one second location estimate comprising or representing the at least one second position; and
   in case the respective pieces of timestamp information are not equal to each other or within the pre-defined timestamp threshold value:
   - discarding these respective first and second location estimates.

### Embodiment 8:

The apparatus according to any of the preceding embodiments, the at least one memory and the computer program code configured to, with the at least one processor, cause the apparatus further to perform:
- identifying a respective mobile device at least partially based on an identification information indicative of a unique identifier of the respective mobile device that is located at the at least one first position of the one or more first location estimates, wherein the at least one first position relatively matches at least one second position of the one or more second location estimates; and
- associating a respective object located at the at least one second position with the respective mobile device at least partially based on the respective identification information.

### Embodiment 9:

The apparatus according to any of the preceding embodiments, wherein a respective first and/or second location estimate of the one or more first and/or second location estimates is further indicative of an altitude, floor, uncertainty value, or a combination thereof.

### Embodiment 10:

The apparatus according to any of the preceding embodiments, wherein the determining whether at least one first position relatively matches at least one second position, further comprises:
- determining a distance between a respective location estimate of the at least one first position and the at least one second position; and/or
- determining an uncertainty value associated with a respective location estimate of the at least one first position and the at least one second position; and
- comparing the determined distance and/or uncertainty value with a pre-defined distance and/or uncertainty threshold value,
   wherein in case the distance and/or uncertainty value are not within the pre-defined distance and/or uncertainty threshold value:
   - discarding the respective first and/or second location estimates.

### Embodiment 11:

A method, comprising:
- determining a first location estimate, wherein the first location estimate is indicative of at least one first position determined by the mobile device; and
- providing (e.g. sending or outputting) the first location estimate to an apparatus performing and/or controlling the method according to the first exemplary aspect of the present invention.

This method may for instance be performed and/or controlled by a mobile device.

### Embodiment 12:

A mobile device configured to perform and/or control or comprising respective means for performing and/or controlling the method according to embodiment 11.

### Embodiment 13:

A mobile device comprising at least one processor and at least one memory including computer program code, the at least one memory and the computer program code configured to, with the at least one processor, cause the apparatus to at least perform:
- determining a first location estimate, wherein the first location estimate is indicative of at least one first position determined by the mobile device; and
- providing (e.g. sending or outputting) the first location estimate to an apparatus performing and/or controlling the method according to the first exemplary aspect of the present invention.

### Embodiment 14:

A method, comprising:
- gathering one or more pieces of optical information; and/or
- determining one or more second location estimates at least partially based on the one or more pieces of optical information, wherein each respective second location estimate of the one or more second location estimates is indicative of at least one second position of an object estimated at least partially based on one or more pieces of optical information indicative of a optically surveyed area; and
- providing (e.g. sending or outputting) the one or more pieces of optical information and/or the one or more second location estimates to an apparatus performing and/or controlling the method according to the first exemplary aspect of the present invention.

This method may for instance be performed and/or controlled by a video-enabled apparatus, e.g. a server coupled to (e.g. connected to) a plurality of optical sensors (e.g. video cameras), which are configured to gather one or more pieces of optical information. Alternatively, this method may for instance be performed and/or controlled by a video surveillance system.

### Embodiment 15:

The method of the embodiment 14, wherein the one or more second location estimates are determined at least partially based on the one or more pieces of optical information, wherein each respective second location estimate of the one or more second location estimates is indicative of at least one second position of an object (e.g. human or non-human object) estimated at least partially based on one or more pieces of optical information indicative of at least one optically surveyed area.

### Embodiment 16:

A video-enabled apparatus configured to perform and/or control or comprising respective means for performing and/or controlling the method according to any of the embodiments 14 to 15.

### Embodiment 17:

A video-enabled apparatus comprising at least one processor and at least one memory including computer program code, the at least one memory and the computer program code configured to, with the at least one processor, cause the apparatus to at least perform:
- gathering one or more pieces of optical information; and/or
- determining one or more second location estimates at least partially based on the one or more pieces of optical information, wherein each respective second location estimate of the one or more second location estimates is indicative of at least one second position of an object estimated at least partially based on one or more pieces of optical information indicative of a optically surveyed area; and
- providing (e.g. sending or outputting) the one or more pieces of optical information and/or the one or more second location estimates to an apparatus performing and/or controlling the method according to the first exemplary aspect of the present invention.

### Embodiment 18:

The video-enabled apparatus according to embodiment 16, wherein the one or more second location estimates are determined at least partially based on the one or more pieces of optical information, wherein each respective second location estimate of the one or more second location estimates is indicative of at least one second position of an object (e.g. human or non-human object) estimated at least partially based on one or more pieces of optical information indicative of at least one optically surveyed area.

### Embodiment 19:

A tangible computer-readable medium storing computer program code, the computer program code when executed by a processor causing an apparatus to perform and/or control:
- determining a first location estimate, wherein the first location estimate is indicative of at least one first position determined by the mobile device; and
- providing (e.g. sending or outputting) the first location estimate to an apparatus performing and/or controlling the method according to the first exemplary aspect of the present invention.

### Embodiment 20:

A tangible computer-readable medium storing computer program code, the computer program code when executed by a processor causing an apparatus to perform and/or control:
- gathering one or more pieces of optical information; and/or
- determining one or more second location estimates at least partially based on the one or more pieces of optical information, wherein each respective second location estimate of the one or more second location estimates is indicative of at least one second position of an object estimated at least partially based on one or more pieces of optical information indicative of a optically surveyed area; and
- providing (e.g. sending or outputting) the one or more pieces of optical information and/or the one or more second location estimates to an apparatus performing and/or controlling the method according to the first exemplary aspect of the present invention.

### Embodiment 21:

A system, comprising:
- at least one apparatus according to any of the embodiments 1 to 10;
- one or more mobile device according to any of the embodiments 12 to 13; and
- at least one video-enabled apparatus according to any of the embodiments 16 to 17.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature of the invention and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The invention has been described above by means of example embodiments. It should be noted that there are alternative ways and variations which are obvious to a skilled person in the art and can be implemented without deviating from the scope of the appended claims.

## Claims

1. A method, comprising:
- obtaining one or more first location estimates, wherein each respective first location estimate of the one or more first location estimates is indicative of at least one first position determined by a mobile device;
- obtaining one or more pieces of optical information, wherein each respective piece of optical information of the one or more pieces of optical information is indicative of at least one optically surveyed area; and/or
- obtaining one or more second location estimates, wherein each respective second location estimate of the one or more second location estimates is indicative of at least one second position of an object estimated at least partially based on one or more pieces of optical information;
if one or more pieces of optical information are obtained:
- determining one or more second location estimates at least partially based on the one or more pieces of optical information;
- determining a matching information indicative of whether at least one first position of the one or more first location estimates relatively matches at least one second position of the one or more second location estimates; and
- determining one or more third location estimates at least partially based on the matching information, wherein each respective third location estimate of the one or more third location estimates is indicative of a refined position of the respective mobile device, wherein the one or more third location estimates are respectively determined at least partially based on the second location estimates and the one or more first location estimates.

2. The method according to claim 1, further comprising:
- outputting the one or more third location estimates.

3. The method according to any of the preceding claims, wherein at least two first positions and/or at least two second positions of at least two first and/or second location estimates represent a path respectively track of a respective mobile device and/or object

4. The method according to claim 3, wherein the path respectively track of a respective object is determined based on one or more attributes of the respective object represented by the one or more pieces of optical information.

5. The method according to any of the preceding claims, wherein a respective first location estimate of the one or more first location estimates and/or a respective second location estimate of the one or more second location estimates is associated with or comprises a first and/or second timestamp information indicative of a time and/or date at which the respective first location estimate of the one or more first location estimates and/or a respective second location estimate of the one or more second location estimates was gathered.

6. The method according to any of the preceding claims, wherein the one or more third location estimates are determined in case the at least one first position of the one or more first location estimates relatively matches at least one second position of the one or more second location estimates.

7. The method according to any of the preceding claims, further comprising:
- determining whether or not a respective first timestamp information associated with or comprised by at least one first location estimate which represented the at least one first position that relatively matches at least one second position of the one or more second location estimates is equal to or within a pre-defined timestamp threshold value by a comparison of the respective first timestamp information to a respective second timestamp information associated with or comprised by the respective at least one second location estimate comprising or representing the at least one second position; and
in case the respective pieces of timestamp information are not equal to each other or within the pre-defined timestamp threshold value:
- discarding these respective first and second location estimates.

8. The method according to any of the preceding claims, further comprising:
- identifying a respective mobile device at least partially based on an identification information indicative of a unique identifier of the respective mobile device that is located at the at least one first position of the one or more first location estimates, wherein the at least one first position relatively matches at least one second position of the one or more second location estimates; and
- associating a respective object located at the at least one second position with the respective mobile device at least partially based on the respective identification information.

9. The method according to any of the preceding claims, wherein a respective first and/or second location estimate of the one or more first and/or second location estimates is further indicative of an altitude, floor, uncertainty value, or a combination thereof.

10. The method according to any or the preceding claims, wnerem the determining whether a least one first position relatively matches at least one second position further comprises:
- determining a distance between a respective location estimate of the at least one first position and the at least one second position; and/or
- determining an uncertainty value associated with a respective location estimate of the at least one first position and the at least one second position; and
- comparing the determined distance and/or uncertainty value with a pre-defined distance and/or uncertainty threshold value,
wherein in case the distance and/or uncertainty value are not within the pre-defined distance and/or uncertainty threshold value:
- discarding the respective first and/or second location estimates.

11. An apparatus configured to perform and/or control or comprising respective means for performing and/or controlling the method according to any of the claims 1 to 10.

12. A mobile device, comprising means for:
- determining a first location estimate, wherein the first location estimate is indicative of at least one first position determined by the mobile device; and
- providing (e.g. sending or outputting) the first location estimate to an apparatus according to claim 11.

13. A video-enabled apparatus, comprising means for:
- gathering one or more pieces of optical information; and/or
- determining one or more second location estimates at least partially based on the one or more pieces of optical information, wherein each respective second location estimate of the one or more second location estimates is indicative of at least one second position of an object estimated at least partially based on one or more pieces of optical information indicative of a optically surveyed area; and
- providing the one or more pieces of optical information and/or the one or more second location estimates to an apparatus according to claim 11.

14. A tangible computer-readable medium storing computer program code, the computer program code when executed by a processor causing an apparatus to perform and/or control:
- obtaining one or more first location estimates, wherein each respective first location estimate of the one or more first location estimates is indicative of at least one first position determined by a mobile device;
- obtaining one or more pieces of optical information, wherein each respective piece of optical information of the one or more pieces of optical information is indicative of at least one optically surveyed area; and/or
- obtaining one or more second location estimates, wherein each respective second location estimate of the one or more second location estimates is indicative of at least one second position of an object estimated at least partially based on one or more pieces of optical information;
if one or more pieces of optical information are obtained:
- determining one or more second location estimates at least partially based on the one or more pieces of optical information;
- determining a matching information indicative of whether at least one first position of the one or more first location estimates relatively matches at least one second position of the one or more second location estimates; and
- determining one or more third location estimates, wherein each respective third location estimate of the one or more third location estimates is indicative of a refined position of the respective mobile device, wherein the one or more third location estimates are respectively determined at least partially based on the second location estimates and the one or more first location estimates.

15. A system, comprising:
- at least one apparatus according to claim 11;
- one or more mobile devices according to claim 12; and
- at least one video-enabled apparatus according to claim 13.
